# EUROPEAN PATENT SPECIFICATION

(11) **EP 4 606 143 B1**
(45) Date of publication and mention of the grant of the patent: **28.01.2026**
(21) Application number: 23786197.6
(22) Date of filing: 03.10.2023
(51) Int. Cl.: H04W 12/80, H04W 12/043

(54) **KEY MANAGEMENT FOR APPLICATIONS**
SCHLÜSSELVERWALTUNG FÜR ANWENDUNGEN
GESTION DE CLÉS POUR DES APPLICATIONS

(30) Priority: 10.10.2022 WO PCT/CN2022/124374
(43) Date of publication of application: 27.08.2025
(73) Proprietor: Telefonaktiebolaget LM Ericsson (publ), 164 83 Stockholm (SE)
(72) Inventor: WANG, Cheng, Shanghai 200335 (CN); TSIATSIS, Vlasios, 112 15 Stockholm (SE)
(74) Representative: Ericsson
(86) International application number: PCT/EP2023/077343
(87) International publication number: WO 2024/078922

(56) References cited:
- EP-A1- 3 068 094
- US-A1- 2018 295 556
- US-A1- 2022 210 636

## Description

### TECHNICAL FIELD

Disclosed are embodiments related to key management for applications.

### BACKGROUND

The 3rd Generation Partnership Project (3GPP) Technical Specification (TS) 33.535 V17.7.0 ("TS 35.535") specifies security features and mechanisms, such as Authentication and Key Management for Applications (AKMA), to support authentication and key management for applications based on the 3GPP fifth generation (5G) subscription credential(s) to enable security establishment between a user equipment (UE) and Application Function (AF). The AF may be internal to a 5G system (e.g., core network) or external to the 5G system. 3GPP is also studying potential needs of enhancement to support AKMA in cases wherein the UE is roaming (see, e.g., 3GPP Technical Report (TR) 33.737 V0.2.0 ("TR 33.737").

TR 33.737 describes certain "key issues." As noted in TR 33.737, AKMA roaming scenarios depend on UE and AF locations, and there are different scenarios for AKMA roaming that need to be addressed, including:
case 1: UE in a Visited Public Land Mobile Network (VPLMN) and accessing the AF (including both internal AF and external AF) in a Home Public Land Mobile Network (HPLMN); and
case 2: UE is in VPLMN and accessing the AF (including both internal AF and external AF) in VPLMN.

As further noted in TR 33.737, the AKMA roaming solutions should comply with Lawful Interception (LI) requirements. It's required either decrypted traffic or the means (e.g. providing keys) for law enforcement to decrypt the traffic should be provided to VPLMN. The LI requirements for access to keys are only for encryption, and in the AKMA case applies when the "Ua*" protocol is encrypted. The document WO 2020/221219, 5th November 2020 (2020/11/05), discloses a method and system for enabling Authentication and Key Management for Applications (AKMA) services in a roaming scenario within 5G networks. The document EP3068094, 14th September 2016 (2016-09-14), discloses a system and method for the lawful interception of encrypted messages in a communication network.

### SUMMARY

Certain challenges presently exist. For example, it is expected that AKMA roaming solutions should comply with LI requirements. Accordingly, a UE's home PLMN (HPLMN) shall support the means to enable a visited PLMN (VPLMN) to decrypt traffic between the UE and an AF which security is established based on AKMA service provided by the HPLMN. According to the architecture mentioned above, however, AKMA service signaling does not travers over the VPLMN. Thus, it is not specified where how the HPLMN provides the cryptographic parameters to the LI function within the VPLMN.

The invention is defined by the independent claims. Further embodiments are described by the dependent claims.

### BRIEF DESCRIPTION OF THE DRAWINGS

The accompanying drawings, which are incorporated herein and form part of the specification, illustrate various embodiments.
FIG. 1A illustrates the AKMA architecture in reference point representation for internal AFs.
FIG. 1B illustrates the AKMA architecture in reference point representation for external AFs.
FIG. 2 illustrates the Roaming Network Model for AKMA when the AF is internal to the HPLMN.
FIG. 3 illustrates the Roaming Network Model for AKMA when the AF is external (e.g., located in a data network (DN)).
FIG. 4 illustrates the Roaming Network Model for AKMA when the AF is internal to the VPLMN.
FIG. 5 is a signaling diagram according to some embodiments.
FIG. 6 is a flowchart illustrating a process according to an embodiment.
FIG. 7 is a block diagram of a network node according to an embodiment.

### DETAILED DESCRIPTION

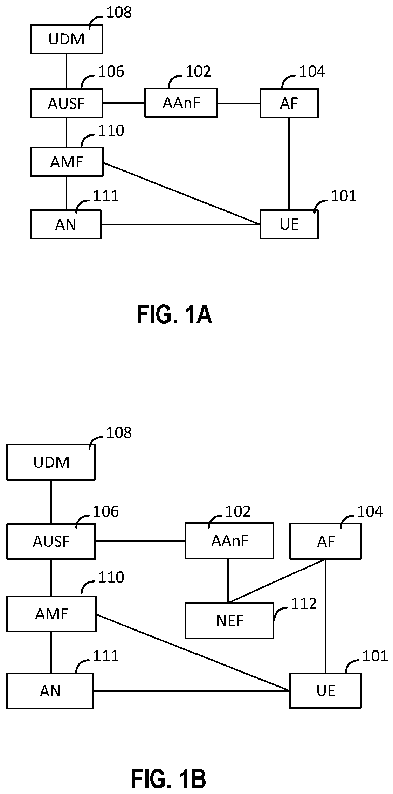

FIG. 1A illustrates the AKMA architecture in reference point representation for internal AFs and FIG. 1B illustrates the AKMA architecture in reference point representation for external AFs. As illustrated in FIG. 1A and FIG. 1B, the AKMA service requires a logical entity called the AKMA Anchor Function (AAnF) 102.

AAnF 102 is the anchor function in the HPLMN of UE 101. The AAnF stores the AKMA Anchor Key (K_{AKMA}) and Subscriber Permanent Identifier (SUPI) for AKMA service, which is received from an authentication server function (AUSF) 106 after the UE completes a successful 5G primary authentication. The AAnF also generates the key material to be used between the UE and the Application Function (AF) 104 and maintains UE AKMA contexts. The AAnF sends the SUPI of the UE to the AF located inside the operator's network according to the AF request or sends to an NEF 112.

The AF is defined in 3GPP TS 23.501 V17.6.0 ("TS 23.501") with possible additional functions, such as: i) AF with the AKMA service enabling requests for AKMA Application Key (K_{AF}) from the AAnF using A-KID; ii) AF shall be authenticated and authorized by the operator network before providing the K_{AF} to the AF; and iii) the AF located inside the operator's network performs the AAnF selection.

The NEF is defined in TS 23.501 with possible additional functions, such as: i) the NEF enables and authorizes the external AF assessing AKMA service and forwards the request towards the AAnF and ii) the NEF performs the AAnF selection.

The AUSF is defined in TS 23.501 with possible additional functions, such as: i) AUSF provides the SUPI and AKMA key material (A-KID, K_{AKMA}) of the UE to the AAnF and ii) AUSF performs the AAnF selection.

UDM 108 is defined in TS 23.501 with the additional function of storing AKMA subscription data of the subscriber.

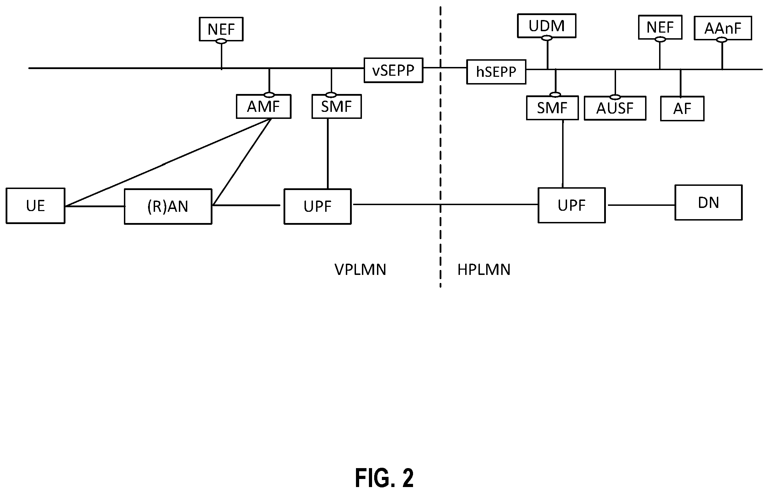

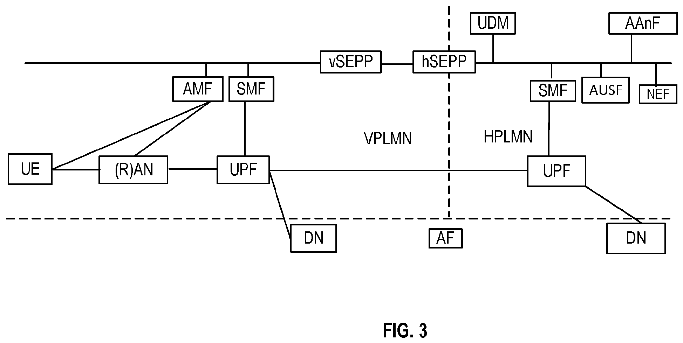

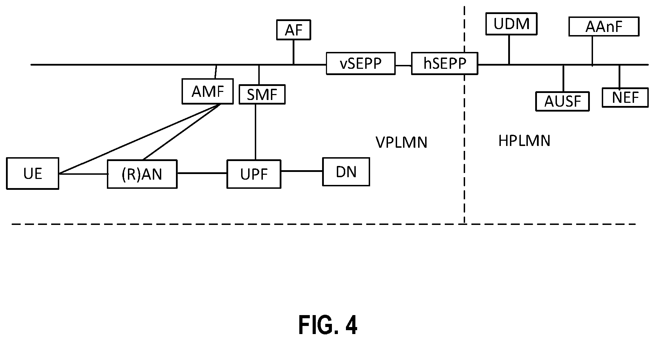

FIG. 2 illustrates the Roaming Network Model for AKMA when the AF is internal to the HPLMN; FIG. 3 illustrates the Roaming Network Model for AKMA when the AF is external (e.g., located in a data network (DN)); and FIG. 4 illustrates the Roaming Network Model for AKMA when the AF is internal to the VPLMN. When the UE is roaming and trying to access an internal HPLMN AF, the UE uses a home-routed Protocol Data Unit (PDU) session and the access is handled by the internal AF as described in TS 33.535, clause 6.2. When the UE is roaming and trying to access an external AF to either HPLMN or VPLMN, the access is handled by the external AF as described in in TS 33.535, clause 6.3. In other words, the external AF contacts the HPLMN AAnF via the HPLMN NEF. When a UE is roaming and trying to access an internal AF to the VPLMN, the access is handled by the external AF as described in TS 33.535, clause 6.3. In other words, the VPLMN AF contacts the HPLMN AAnF via the HPLMN NEF.

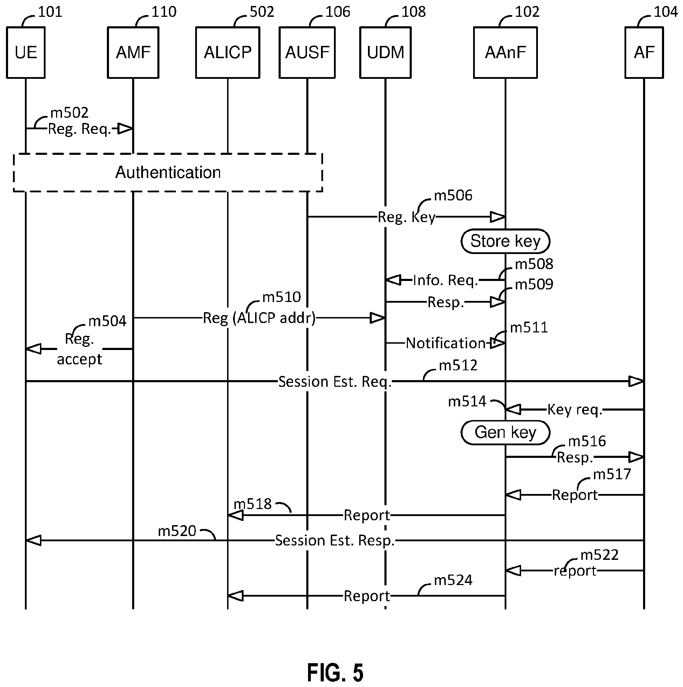

In one embodiment, there is provided a lawful interception (LI) function 502 (herein called the "AKMA LI regulatory control point (ALICP)" 502 (see FIG. 5)) deployed in a serving VPLMN. ALICP obtains cryptographic parameters and performs necessary regulatory actions accordingly.

The ALICP can be either a standalone node in the PLMN or be combined with an existing 5G core network function (NF) (e.g. Access and Mobility Management Function (AMF) 110, Security Anchor Function (SEAF), Session Management Function (SMF), User Plane Function (UPF) etc.) or be part of these 5G NFs.

Traffic encryption between the UE and the AF is enabled by cryptographic parameters (e.g., encryption keys). The cryptographic parameters may include:
i) security materials specified in the AKMA service and known to the AKMA Anchor Function (AAnF), including keys Kₐₖₘₐ, K_{af}, and the information used to derive Kaf and/or refresh Kaf (e.g., the information can include a counter) (these are called "crypto information 1" for brevity); and
ii) security keys not specified in AKMA service and known to AF, including: keys derived from K_{af} or other parameters derived in the AF, the information used for key derivation (e.g., selected encryption algorithms, cipher suite, input for ciphering key(s), nonce(s), counter(s) etc.) (these are called "crypto information 2" for brevity).

In some embodiments, when AAnF obtains crypto information 1 or crypto information 2 or an update of these parameters, AAnF delivers the cryptographic information to the ALICP. The AAnF obtains ALICP address (per VPLMN) possibly: 1) based on local configuration and VPLMN ID info that is part of UE roaming information retrieved from UDM and/or 2) from the UE roaming information which contains ALICP info directly (that is, when the UE attaches to the 5GC, AMF registers address of ALICP of the serving PLMN in UE registration context that is stored in UDM). In some embodiments, when AAnF receives AKMA root key registration, it retrieves UE's roaming information, vPLMN info, and/or the ALICP info from UDM, and subscribes from UDM to get potential further update of this information. AAnF obtains crypto information 2 from AF, possibly via Network Exposure Function (NEF).

FIG. 5 is a signaling diagram illustrating a process according to some embodiments.

The process begins with UE 101 sending a registration request message m502, which is received and processed by AMF 110. If the registration request indicates that the UE is performing an initial registration, then an authentication process is performed.

The process also includes the AUSF sending to the AAnF register key message m506, which message includes the AKMA Anchor Key (K_{AKMA}), which is generated as defined in TS 33.535. AAnF stores K_{AKMA}.

After receiving message m506, the AAnF sends to the UDM an information request message m508 (e.g., a UE Roaming Information Request message). Message m508 contains an ID associated with the UE (UE ID, such as SUPI) and may also include an indication to retrieve ALICP information (e.g., the address for the ALICP, which the ALICP may include in its network function (NF) profile that it registers with a network repository function (NRF)). Message m508 configures the UDM such that, when information for the UE identified by the UE ID is updated, the UDM sends to the AAnF a notification message, which may comprise the updated information.

The UDM sends to the AANF a response message m509 (e.g. a UE roaming information Response message). The message m509 contains UE ID of UE, UE context information (e.g. PLMN ID of network serving the UE), AMF address of the AMF serving the UE, ALICP address (if available), Access Types etc). If UE is not registered in UDM yet or registered over more than one visiting PLMNs, there could be zero or multiple sets of such information in the response message m509. In the case where the Registration Request m502 is not for an initial registration, then there might exist already UE context info including ALICP addr in UDM, e.g from an earlier UE registration.

In one embodiment, the AMF obtains the address of the ALICP (e.g., by retrieving the ALICP's NF profile (or portion thereof) from the NRF or retrieving the ALICP's address from the AMF's local configuration). The address may be an Internet Protocol address or a domain name (e.g. a Fully Qualified Domain Name (FQDN). After obtaining the ALICP address, the AMF sends to the UDM a registration message m510 (e.g., AMF invokes the Nudm_UECM_Registration procedure). The message contains UE ID of UE, serving PLMN ID, and ALICP address. The UE registration information is updated and stored in the UDM. This step may occur before the AAnF sends message m508; in such a scenario, the response message 509 should contain the ALICP address. The AMF also sends to the UE a registration accept message m504 to inform the UE that its registration request has been accepted.

Given that the UE's registration information has been updated (e.g., the ALICP address has been added to the UE's registration information), the UDM sends to the AAnF a notification message m511 (e.g., a UE roaming information Update). The message m511 contains UE ID of UE and the ALICP address (the message may also include other UE context information (e.g. PLMN ID of visiting network, AMF address, Access Types, etc.).

As shown in FIG. 5, the UE may initiate communication with the AF by sending to the AF an a session establishment request message m512. After receiving message m512, the AF requests an AF key from the AAnF (possibly via NEF if the AF is not authorized to communicate directly with the AAnF). That is the AF transmits a key request message m514. In some embodiment the key request message m514 is a Naanf_AKMA_ApplicationKey_Get request message or a Nnef_AKMA_ApplicationKey_Get request message, both defined in TS 33.535.

After receiving the key request message m514, the AAnF generates the AF key (K_{af}) and, as specified in TS 33.535, the AAnF sends to the AF a key response message m516 containing K_{af}. The key response message may be a Naanf_AKMA_ApplicationKey_Get response message or a Nnef_AKMA_ApplicationKey_Get response , both defined in TS 33.535.

In one embodiment, the AAnF includes in the key response message m516 an indicator requesting the AF to report AF crypto information (i.e. crypto information 2).

After obtaining Kaf, the AF may generate crypto information 2 (e.g., security material derived from Kaf or other key material derived in AF, the information used for keys derivation thereof including selected encryption algorithms, cipher suite, input for ciphering: key(s), nonce(s), counter(s) etc). In addition, the AF may send to the AAnF a report message m517 containing the crypto information 2.

After sending the AF key to the AF, the AAnF may obtain the ALICP address and use the ALICP address to send to the ALICP a report message m518 that contains UE ID (e.g. SUPI) crypto information 1 and/or crypto information 2 obtained from the AF in report message m517.

The AF also sends to the UE a session establishment response message m520. At this point, communication between UE and AF is established and protected. The communication may be protected by crypto information 1 (e.g., the Kaf) or crypto information 2 (e.g., key material derived from Kaf or other key material derived in AF).

If the AF update the crypto parameters that are used to encrypt the traffic from/to the UE, the AF sends another report message m522 (e.g. AF crypto information Report) to provide or update crypto information 2 to AAnF, possibly via NEF. The message contains UE ID, crypto information 2.

When crypto information 1 or crypto information 2 is updated in AAnF, AAnF sends another report message m524 (e.g. AKMA Crypto Information Update) to ALICP. The message m5245 contains UE ID (e.g. SUPI), crypto information 1 or crypto information 2 or both.

In the above manner, the ALICP gets the AKMA crypto information for the UE and performs necessary regulatory actions accordingly (e.g., now the ALICP can decrypt traffic sent by the UE to the AMF and traffic sent by the AF to the UE).

In some embodiments, if ALICP address is not reported by the AMF to the UDM nor included in UE roaming information, the AAnF obtains the ALICP address based on local configuration and the PLMN ID identifying the network serving the UE.

In some embodiments, if AKMA context is removed or stopped in the AAnF, AAnF may send to ALICP a message (e.g. AKMA Crypto Information Remove) to remove all AKMA crypto information for the UE.

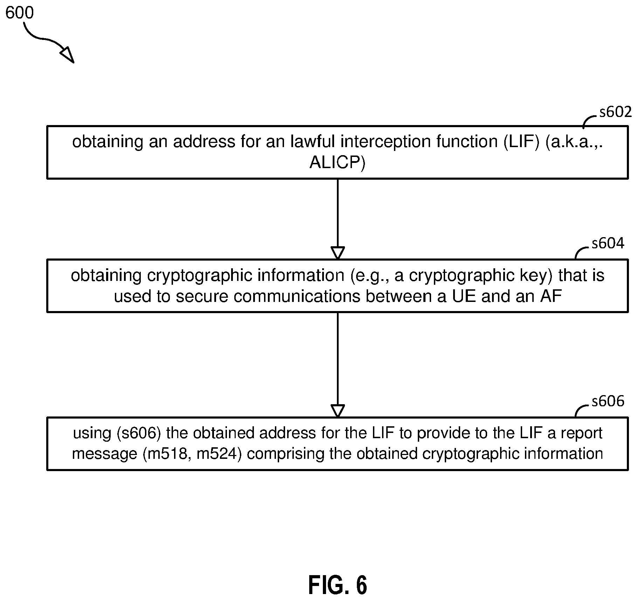

FIG. 6 is a flow chart illustrating a process 600 according to an embodiment. Process 600 may begin in step s602.

Step s602 comprises obtaining an address for a lawful interception function (LIF) (a.k.a.,. ALICP).

Step s604 comprises obtaining cryptographic information (e.g., a cryptographic key) that is used to secure communications between the UE and the AF.

Step s606 comprises using the obtained address for the LIF to provide to the LIF the obtained cryptographic information.

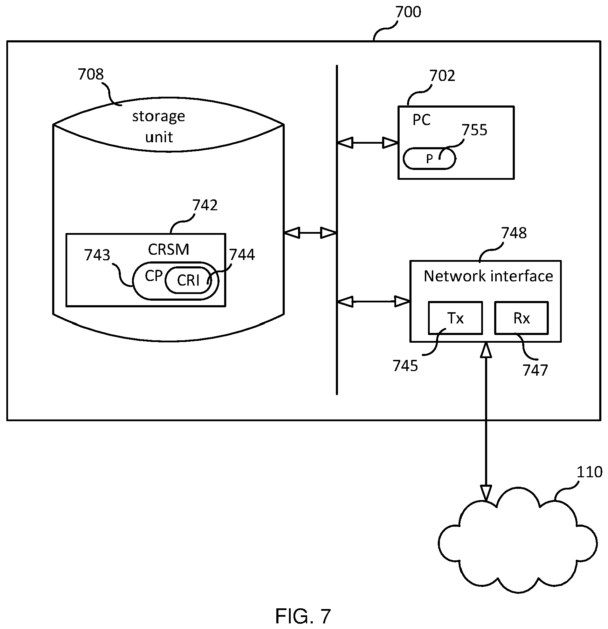

FIG. 7 is a block diagram of network node 700, according to some embodiments. Network node 700 can be implement any one of the network functions disclosed herein. As shown in FIG. 7, network node 700 may comprise: processing circuitry (PC) 702, which may include one or more processors (P) 755 (e.g., one or more general purpose microprocessors and/or one or more other processors, such as an application specific integrated circuit (ASIC), field-programmable gate arrays (FPGAs), and the like), which processors may be co-located in a single housing or in a single data center or may be geographically distributed (i.e., network node 700 may be a distributed computing apparatus); at least one network interface 748 (e.g., a physical interface or air interface) comprising a transmitter (Tx) 745 and a receiver (Rx) 747 for enabling network node 700 to transmit data to and receive data from other nodes connected to a network 110 (e.g., an Internet Protocol (IP) network) to which network interface 748 is connected (physically or wirelessly) (e.g., network interface 748 may be coupled to an antenna arrangement comprising one or more antennas for enabling network node 700 to wirelessly transmit/receive data); and a storage unit (a.k.a., "data storage system") 708, which may include one or more non-volatile storage devices and/or one or more volatile storage devices. In embodiments where PC 702 includes a programmable processor, a computer readable storage medium (CRSM) 742 may be provided. CRSM 742 may store a computer program (CP) 743 comprising computer readable instructions (CRI) 744. CRSM 742 may be a non-transitory computer readable medium, such as, magnetic media (e.g., a hard disk), optical media, memory devices (e.g., random access memory, flash memory), and the like. In some embodiments, the CRI 744 of computer program 743 is configured such that when executed by PC 702, the CRI causes network node 700 to perform steps described herein (e.g., steps described herein with reference to the flow charts). In other embodiments, network node 700 may be configured to perform steps described herein without the need for code. That is, for example, PC 702 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above-described exemplary embodiments. Moreover, any combination of the above-described elements in all possible variations thereof is encompassed by the disclosure unless otherwise indicated herein or otherwise clearly contradicted by context.

As used herein transmitting a message "to" or "toward" an intended recipient encompasses transmitting the message directly to the intended recipient or transmitting the message indirectly to the intended recipient (i.e., one or more other nodes are used to relay the message from the source node to the intended recipient). Likewise, as used herein receiving a message "from" a sender encompasses receiving the message directly from the sender or indirectly from the sender (i.e., one or more nodes are used to relay the message from the sender to the receiving node). Further, as used herein "a" means "at least one" or "one or more."

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

## Claims

1. A method (600) comprising:
obtaining (s602) an address for a lawful interception function, LIF;
obtaining (s604) cryptographic information that is used to secure communications between a user equipment, UE (101), and an application function, AF (104); and
using (s606) the obtained address for the LIF to provide to the LIF a report message (m518, m524) comprising the obtained cryptographic information, wherein
the UE has a home Public Land Mobile Network, PLMN,
the UE is currently being served by a visited PLMN, VPLMN,
the LIF is within the VPLMN, and
the method is performed by a network function within the UE's home PLMN.

2. The method of claim 1, wherein the method is performed by an anchor function, AnF.

3. The method of claim 1 or 2, wherein
obtaining the address for the LIF comprises receiving a message (m509, m511) transmitted by a data manager (108), and
the message transmitted by the data manager comprises an identifier associated with the UE and the address for the LIF.

4. The method of claim 1 or 2, wherein obtaining the address for the LIF comprises:
receiving a message (m509, m511) transmitted by a data manager (108), wherein the message transmitted by the data manager comprises a network identifier identifying a network serving the UE; and
using the network identifier to determine the address.

5. The method of any one of claims 1-4, further comprising:
receiving from the AF a key request message (m514); and
sending to the AF a key response message (m516) responsive to the key request message, wherein
the key response message comprises an AF key.

6. The method of claim 5, wherein the report message comprises the AF key.

7. The method of claim 5, further comprising:
after sending the key response message, receiving a message (m517, m522) transmitted by the AF, wherein the message transmitted by the AF comprises a derived key that the AF derived using the AF key and/or parameters that the AF used to derive the derived key, wherein
the report message comprises the derived key and/or the parameters that the AF used to derive the derived key.

8. The method of any one of claims 5-7, further comprising generating the AF key in response to receiving the key request message.

9. A computer program (743) comprising instructions (744) which when executed by processing circuitry (702) of a network node causes the network to perform the method of any one of claims 1-8.

10. A carrier containing the computer program of claim 9, wherein the carrier is one of an electronic signal, an optical signal, a radio signal, and a computer readable storage medium (742).

11. A network node (700) being configured to perform a process comprising:
obtaining (s602) an address for a lawful interception function, LIF;
obtaining (s604) cryptographic information that is used to secure communications between a user equipment, UE (101), and an application function, AF (104); and
using (s606) the obtained address for the LIF to provide to the LIF a report message (m518, m524) comprising the obtained cryptographic information, wherein
the UE has a home Public Land Mobile Network, PLMN,
the UE is currently being served by a visited PLMN, VPLMN,
the LIF is within the VPLMN, and
the method is performed by a network function within the UE's home PLMN.

12. The network node of claim 11, wherein the network node is further configured to perform the process of any one of claims 2-8.

## Patentansprüche

1. Verfahren (600), umfassend:
Erhalten (s602) einer Adresse für eine Funktion für gesetzliche Überwachung, LIF;
Erhalten (s604) kryptografischer Informationen, die verwendet werden, um Kommunikationen zwischen einer Benutzereinrichtung, US, (101) und einer Anwendungsfunktion, AF, (104) zu sichern; und
Verwenden (s606) der erhaltenen Adresse für die LIF, um der LIF eine Meldungsnachricht (m518, m524) bereitzustellen, die die erhaltenen kryptografischen Informationen umfasst, wobei
die UE ein öffentliches Landfunknetzwerk, PLMN, aufweist,
die UE gegenwärtig von einem Besucher-PLMN, VPLMN, bedient wird,
die LIF sich innerhalb des VPLMN befindet und
das Verfahren von einer Netzwerkfunktion innerhalb des Heimat-PLMN der UE durchgeführt wird.

2. Verfahren nach Anspruch 1, wobei das Verfahren von einer Ankerfunktion, AnF, durchgeführt wird.

3. Verfahren nach Anspruch 1 oder 2, wobei
das Erhalten der Adresse für die LIF Empfangen einer Nachricht (m509, m511) umfasst, die von einem Datenmanager (108) übertragen wird, und
die von dem Datenmanager übertragene Nachricht ein Kennung, die mit der UE assoziiert ist, und die Adresse für die LIF umfasst.

4. Verfahren nach Anspruch 1 oder 2, wobei das Erhalten der Adresse für die LIF Folgendes umfasst:
Empfangen einer Nachricht (m509, m511), die von einem Datenmanager (108) übertragen wird, wobei die von dem Datenmanager übertragene Nachricht eine Netzwerkkennung umfasst, die ein Netzwerk identifiziert, das die UE bedient; und
Verwenden der Netzwerkkennung zum Bestimmen der Adresse.

5. Verfahren nach einem der Ansprüche 1-4, ferner umfassend:
Empfangen einer Schlüsselanforderungsnachricht (m514) von der AF; und
Senden einer Schlüsselantwortnachricht (m516) in Reaktion auf die Schlüsselanforderungsnachricht an die AF, wobei
die Schlüsselantwortnachricht einen AF-Schlüssel umfasst.

6. Verfahren nach Anspruch 5, wobei die Meldungsnachricht den AF-Schlüssel umfasst.

7. Verfahren nach Anspruch 5, ferner umfassend:
nach dem Senden der Schlüsselantwortnachricht Empfangen einer Nachricht (m517, m522), die von der AF übertragen wird, wobei die von der AF übertragene Nachricht einen abgeleiteten Schlüssel, den die AF unter Verwendung des AF-Schlüssels abgeleitet hat, und/oder Parameter umfasst, die die AF zum Ableiten des abgeleiteten Schlüssels verwendet hat, wobei
die Meldungsnachricht den abgeleiteten Schlüssel und/oder die Parameter umfasst, die die AF zum Ableiten des abgeleiteten Schlüssels verwendet hat.

8. Verfahren nach einem der Ansprüche 5-7, ferner umfassend Erstellen des AF-Schlüssels in Reaktion auf den Empfang der Schlüsselanforderungsnachricht.

9. Computerprogramm (743), umfassend Anweisungen (744), die bei Ausführung durch Verarbeitungsschaltungsanordnung (702) eines Netzwerkknotens den Netzwerkknoten zum Durchführen des Verfahrens nach einem der Ansprüche 1-8 veranlassen.

10. Datenträger, der das Computerprogramm nach Anspruch 9 enthält, wobei der Datenträger eines von einem elektronischen Signal, einem optischen Signal, einem Funksignal und einem computerlesbaren Speichermedium (742) ist.

11. Netzwerkknoten (700), der zum Durchführen eines Prozesses konfiguriert ist, der Folgendes umfasst:
Erhalten (s602) einer Adresse für eine Funktion für gesetzliche Überwachung, LIF;
Erhalten (s604) kryptografischer Informationen, die verwendet werden, um Kommunikationen zwischen einer Benutzereinrichtung, US, (101) und einer Anwendungsfunktion, AF, (104) zu sichern; und Verwenden (s606) der erhaltenen Adresse für die LIF, um der LIF eine Meldungsnachricht (m518, m524) bereitzustellen, die die erhaltenen kryptografischen Informationen umfasst, wobei
die UE ein öffentliches Landfunknetzwerk, PLMN, aufweist,
die UE gegenwärtig von einem Besucher-PLMN, VPLMN, bedient wird,
die LIF sich innerhalb des VPLMN befindet sich und
das Verfahren von einer Netzwerkfunktion innerhalb des Heimat-PLMN der UE durchgeführt wird.

12. Netzwerkknoten nach Anspruch 11, wobei der Netzwerkknoten ferner zum Durchführen des Prozesses nach einem Ansprüche 2-8 konfiguriert ist.

## Revendications

1. Procédé (600) comprenant :
l'obtention (s602) d'une adresse pour une fonction d'interception licite, LIF ;
l'obtention (s604) d'informations cryptographiques qui sont utilisées pour sécuriser des communications entre un équipement utilisateur, UE (101), et une fonction d'application, AF (104) ; et
l'utilisation (s606) de l'adresse obtenue pour la LIF pour fournir à la LIF un message de rapport (m518, m524) comprenant les informations cryptographiques obtenues, dans lequel
l'UE présente un réseau mobile terrestre public, PLMN, de rattachement,
l'UE est couramment desservi par un PLMN, visité, VPLMN,
la LIF est à l'intérieur du VPLMN, et
le procédé est réalisé par une fonction de réseau à l'intérieur du PLMN de rattachement de l'UE.

2. Procédé selon la revendication 1, dans lequel le procédé est réalisé par une fonction d'ancrage, AnF.

3. Procédé selon la revendication 1 ou 2, dans lequel
l'obtention de l'adresse pour la LIF comprend la réception d'un message (m509, m511) transmis par un gestionnaire de données (108), et
le message transmis par le gestionnaire de données comprend un identifiant associé à l'UE et l'adresse pour la LIF.

4. Procédé selon la revendication 1 ou 2, dans lequel l'obtention de l'adresse pour la LIF comprend :
la réception d'un message (m509, m511) transmis par un gestionnaire de données (108), dans lequel le message transmis par le gestionnaire de données comprend un identifiant de réseau qui identifie un réseau desservant l'UE ; et
l'utilisation de l'identifiant de réseau pour déterminer l'adresse.

5. Procédé selon l'une quelconque des revendications 1 à 4, comprenant en outre :
la réception, depuis l'AF, d'un message de demande de clé (m514) ; et
l'envoi, à l'AF, d'un message de réponse de clé (m516) en réponse au message de demande de clé, dans lequel
le message de réponse de clé comprend une clé AF.

6. Procédé selon la revendication 5, dans lequel le message de rapport comprend la clé AF.

7. Procédé selon la revendication 5, comprenant en outre :
après l'envoi du message de réponse de clé, la réception d'un message (m517, m522) transmis par l'AF, dans lequel le message transmis par l'AF comprend une clé dérivée que l'AF a dérivée à l'aide de la clé AF et/ou de paramètres que l'AF a utilisés pour dériver la clé dérivée, dans lequel
le message de rapport comprend la clé dérivée et/ou les paramètres que l'AF a utilisés pour dériver la clé dérivée.

8. Procédé selon l'une quelconque des revendications 5 à 7, comprenant en outre la génération de la clé AF en réponse à la réception du message de demande de clé.

9. Programme informatique (743) comprenant des instructions (744) qui, lorsqu'elles sont exécutées par une circuiterie de traitement (702) d'un nœud de réseau, amènent le nœud de réseau à réaliser le procédé selon l'une quelconque des revendications 1 à 8.

10. Support contenant le programme informatique selon la revendication 9, dans lequel le support est l'un parmi un signal électronique, un signal optique, un signal radio et un support de stockage lisible par ordinateur (742).

11. Nœud de réseau (700) étant configuré pour réaliser un procédé comprenant :
l'obtention (s602) d'une adresse pour une fonction d'interception licite, LIF ;
l'obtention (s604) d'informations cryptographiques qui sont utilisées pour sécuriser des communications entre un équipement utilisateur, UE (101), et une fonction d'application, AF (104) ; et
l'utilisation (s606) de l'adresse obtenue pour la LIF pour fournir à la LIF un message de rapport (m518, m524) comprenant les informations cryptographiques obtenues, dans lequel
l'UE présente un réseau mobile terrestre public, PLMN, de rattachement,
l'UE est couramment desservi par un PLMN, visité, VPLMN,
la LIF est à l'intérieur du VPLMN, et
le procédé est réalisé par une fonction de réseau à l'intérieur du PLMN de rattachement de l'UE.

12. Nœud de réseau selon la revendication 11, dans lequel le nœud de réseau est en outre configuré pour réaliser le procédé selon l'une quelconque des revendications 2 à 8.
